# EUROPÄISCHE PATENTSCHRIFT

(11) **EP 1 540 322 B1**
(45) Veröffentlichungstag und Bekanntmachung des Hinweises auf die Patenterteilung: **11.01.2006**
(21) Anmeldenummer: 03793822.2
(22) Anmeldetag: 01.09.2003
(51) Int. Cl.: G01N 27/28, F15B 15/26

(54) **WECHSELARMATUR MIT EINEM SENSOR**
RETRACTABLE HOUSING COMPRISING A SENSOR
SUPPORT RETRACTABLE COMPRENANT UN CAPTEUR

(30) Priorität: 09.09.2002 DE 10241833
(43) Veröffentlichungstag der Anmeldung: 15.06.2005
(73) Patentinhaber: Mettler-Toledo GmbH, 8606 Greifensee (CH)
(72) Erfinder: CADERAS, Daniel, CH-8235 Lohn (CH)
(86) Internationale Anmeldenummer: PCT/EP2003/050604
(87) Internationale Veröffentlichungsnummer: WO 2004/023127

(56) Entgegenhaltungen:
- EP-A- 0 545 177
- EP-A- 0 590 290
- EP-A- 0 882 896
- WO-A-83/03778

## Beschreibung

### Technisches Gebiet

Die Erfindung betrifft eine Wechselarmatur mit einem Sensor gemäss dem Oberbegriff des Anspruches 1.

### Stand der Technik

Eine Wechselarmatur der eingangs genannten Art ist beispielsweise aus der EP 0 882 896 A1 bekannt. Die dort beschriebene Wechselarmatur enthält einen Sensor, der herausnehmbar in einem Tauchrohr angeordnet ist, welches in einem Gehäuse zwischen einer eingefahrenen Ruhestellung und einer ausgefahrenen Arbeitsstellung axial verschiebbar ist, um das Sensorvorderteil in Kontakt mit einem Messmedium zu bringen. In eingesetzter Lage bildet der Sensor einen mediumdichten Abschluss des Tauchrohres, beispielsweise mittels einer zwischen Tauchrohr und Sensorgehäuse angeordneten Ringdichtung. Da ein Ausfahren des Tauchrohres von der Ruhestellung in die Arbeitsstellung bei nicht eingebautem Sensor wegen des dann nicht vorhandenen mediumdichten Abschlusses einen unerwünschten Austritt von Messmedium in das leere Tauchrohr und weitere Teile der Wechselarmatur verursachen kann, ist die bekannte Wechselarmatur mit einer Sicherungsvorrichtung ausgestattet, die ein axiales Verschieben des Tauchrohres bei nicht eingesetztem Sensor verhindert.

Bei der Wechselarmatur gemäss der EP 0 882 896 A1 ist der Sensor mittels eines im hinteren Schaftbereich befindlichen Aussengewindes in ein entsprechendes Innengewinde des Tauchrohres eingeschraubt. Beim Einschrauben des Sensors wird ein koaxial im Inneren des Tauchrohres angeordneter hülsenartiger Sicherungsschieber von einer Sperrstellung in eine Freigabestellung bezüglich der axialen Bewegung des Tauchrohres gebracht. Bei diesem Funktionsprinzip ergibt sich, dass die Länge des Tauchrohres im Wesentlichen der Länge des Sensors entsprechen muss. Da jedoch die Hublänge des Tauchrohres, d.h. der Abstand zwischen der eingefahrenen Ruhestellung und der maximal ausgefahrenen Stellung des Tauchrohres zwangsläufig kleiner als die Länge des Tauchrohres ist, ist die erreichbare Hublänge durch die Länge des Sensors begrenzt. Demnach lässt sich beispielsweise ein Sensor der sehr gebräuchlichen Länge von 12 cm mit einer Wechselarmatur der bekannten Art maximal um etwas weniger als 12 cm ausfahren, was jedoch für zahlreiche Anwendungen, beispielsweise für Messungen in grossen Reaktionsgefässen, unzureichend ist.

In der EP 0 106 858 B1 ist eine Wechselarmatur beschrieben, bei der ein Sensor in einem Tauchrohr untergebracht ist, das wesentlich länger als der Sensor sein kann. Der Sensor ragt dabei mit seiner Messspitze aus dem vorderen, offenen Ende des Tauchrohres heraus. Das mit einem Reaktionsgefäss verbindbare Gehäuseteil weist am vorderen Ende einen durchbrochenen Käfig auf, in welchen der vordere Teil des Tauchrohres und insbesondere die aus diesem herausragende Sensorspitze vorgeschoben wird, um die ausgefahrene Messstellung zu erreichen. Eine im Käfig angeordnete Feder spannt das Tauchrohr in die eingefahrene Ruhestellung vor und hält dabei ein vorderes Verschlussglied des Tauchrohres in Schliessstellung, d.h. beim Ausfahren des Tauchrohres ist die Vorspannkraft der Feder zu überwinden. Bei dieser Wechselaramatur ist die Hublänge zwar nicht durch die Sensorlänge begrenzt; allerdings ist die Hublänge durch den nutzbaren Weg der Vorspannfeder begrenzt, was in der Praxis einen erheblichen Nachteil darstellt. Ebenfalls nachteilig ist es, dass das Öffnen des Verschlussgliedes mittels des Sensors oder dessen Halter zu erfolgen hat, wenn der Sensor in die Messstellung ausgefahren wird, wobei dann das vordere Ende des Sensors bzw. des Halters das Verschlussglied entgegen der Kraft der Vorspannfeder aufdrückt. Somit muss der Sensor am vorderen Ende besonders widerstandsfähig ausgebildet sein oder der Halter mit einem vorderen Stössel versehen sein, der das Verschlussglied aufdrückt. Ein solcher Stössel ist ein zusätzliches Bauteil und kann zudem den Messvorgang der Sonde behindern. Ausserdem ist die im Käfig befindliche Feder der Verschmutzung durch das Messmedium ausgesetzt und nur schwer zu reinigen. Ein weiterer, gravierender Nachteil der Wechselarmatur gemäss der EP 0 106 858 B1 ist zudem, dass diese keinerlei Sicherung gegenüber einem Ausfahren bei fehlendem Sensor aufweist.

### Darstellung der Erfindung

Aufgabe der Erfindung ist es, eine verbesserte Wechselarmatur anzugeben, um insbesondere die oben genannten Nachteile zu vermeiden.
Gelöst wird diese Aufgabe durch die im Anspruch 1 definierte Wechselarmatur. Diese beinhaltet einen Sensor, der herausnehmbar im Vorderteil eines Tauchrohres angeordnet ist, das in einem Gehäuse zwischen einer eingefahrenen Ruhestellung und einer ausgefahrenen Arbeitsstellung axial verschiebbar ist, wobei der Sensor in eingesetzter Lage einen mediumdichten Abschluss des Tauchrohres bildet.

In den obigen und folgenden Ausführungen seien die Positionsangaben "vorne" bzw. "vordere" oder Abwandlungen dieser Begriffe als im Betriebszustand der Wechselarmatur einem Reaktionsgefäss, an welches diese angeschlossen werden kann, zugewandt oder diesem näher positioniert zu verstehen. Entsprechend sind die Positionsangaben "hinten" bzw. "hintere" oder Abwandlungen dieser Begriffe als dem Reaktionsgefäss abgewandt oder diesem entfernter positioniert zu verstehen.

Dadurch, dass das Tauchrohr einen herausnehmbaren, mittels eines Verschlussgliedes fixierbaren Einsatz enthält, mittels welchem der Sensor in eingesetzter Lage gegen einen vorderen Anschlag des Tauchrohres vorgeschoben ist, kann die Gesamtlänge des Tauchrohres und damit auch die Hublänge zwischen eingefahrener Ruhestellung und ausgefahrener Arbeitsstellung wesentlich länger als die Sensorlänge gestaltet sein.

Es ist eine Sicherungsvorrichtung vorhanden ist, die einen das hintere Ende des Einsatzes hülsenartig umgreifenden Sicherungsschieber aufweist, der zwischen einem weiteren frontseitigen Anschlag und einem rückseitigen Anschlag innerhalb des Tauchrohres von einer ersten Sperrstellung über eine Freigabestellung zu einer zweiten Sperrstellung verschiebbar ist, wobei der Sicherungsschieber mit mindestens einem Sperrglied zusammenwirkt, das radial verschieblich im Tauchrohr angeordnet ist. In Sperrstellung des Sicherungsschiebers steht das Sperrglied mit seiner Innenseite am Mantel des Sicherungsschiebers an und greift mit seiner Aussenseite in eine Sperrausnehmung im Gehäuse ein. In Freigabestellung des Sicherungsschiebers greift das Sperrglied mit der Innenseite in eine Umfangsnut im Sicherungsschieber ein und kommt mit seiner Aussenseite aus der Sperrausnehmung des Gehäuses frei. Damit wird ein axiales Verschieben des Tauchrohres aus der Ruhestellung verhindert, wenn mindestens eines der Bauteile: Sensor, Einsatz und Verschlussglied fehlt, wodurch eine umfassende Betriebssicherheit gegenüber einer versehentlichen Manipulation der Wechselarmatur bei einem fehlendem Bauteil erreicht wird. Insbesondere lässt sich bei an einem Reaktionsgefäss oder dergleichen angeschlossener Wechselarmatur verhindern, dass bei einem - beispielsweise wegen Wartung oder Austausch - nicht eingebauten Bauteil ein unbedachtes Verschieben des Tauchrohres mit nachteiligen Folgen vorgenommen wird.

Vorteilhafte Ausgestaltungen der Erfindung sind in den abhängigen Ansprüchen definiert.

Grundsätzlich kann der Einsatz verschiedene Formen haben und beispielsweise stabförmig sein. Gemäss Anspruch 2 ist der Einsatz rohrartig ausgebildet und weist zudem eine vordere Stirnseite auf, die gegen eine zugeordnete rückwärtige Stirnseite des Sensors, vorzugsweise am Sensorschaft, ansteht. Eine kompakte Bauweise der Wechselarmatur ist im Anspruch 3 definiert, wonach das Verschlussglied am hinteren Ende des Tauchrohres einsetzbar ist und in eingesetzter Stellung den Einsatz am Sensor und letzteren am vorderen Anschlag hält.
Die Wechselarmatur nach Anspruch 4 ist hinsichtlich der Ausgestaltung der Sicherungsvorrichtung besonders bevorzugt.

Gemäss Anspruch 4 weist der Sicherungsschieber einen vorderen Sperrbereich, einen hinteren Sperrbereich sowie eine mittige Umfangsnut auf und ist mittels einer ersten Feder gegen das hintere Ende des Tauchrohres vorgespannt und steht bei vorhandenem Einsatz an einem hinteren Flansch des Einsatzes an. Am Verschlussglied ist eine zweite Feder angeordnet, mittels welcher der Einsatz gegen das vordere Ende des Tauchrohres vorgespannt ist, das Ganze derart, dass:
a) bei fehlendem Verschlussglied der Sicherungsschieber mit dem vorderen Sperrbereich dem Sperrglied gegenüber steht;
b) bei fehlendem Einsatz der Sicherungsschieber mit dem vorderen Sperrbereich dem Sperrglied gegenüber steht;
c) bei vorhandenem Verschlussglied und fehlendem Sensor der Sicherungsschieber mit dem hinteren Sperrbereich dem Sperrglied gegenüber steht; und
d) in betriebsbereitem Zustand der Sicherungsschieber mit der mittigen Umfangsnut dem Sperrglied gegenüber steht.

Dadurch, dass gemäss Anspruch 5 der Einsatz, die zweite Feder und das Verschlussglied je mit einer durchgehenden seitlichen Ausnehmung versehen sind, wird der Ein- und Ausbau des Sensors erleichtert. Besonders geeignet ist dies für Sensoren, die ein Verbindungskabel mit vergleichsweise sperrigen Steckeranschlüssen aufweisen, welche ein Einfädeln in den rohrartigen Einsatz nicht erlauben.

Gemäss Anspruch 6 beinhaltet ein vorderer Teil des Gehäuses einen Spülbereich mit einem Zulauf und einem Ablauf für Spülmedium. Unter Spülmedium ist im vorliegenden Zusammenhang nicht nur eine eigentliche Spülflüssigkeit wie beispielsweise Wasser zu verstehen, sondern auch Reinigungsmedien wie sie für die sogenannte CIP-Reinigung (engl. "Cleaning In Place") verwendet werden, oder beispielsweise Kalibrierungsflüssigkeiten, Spülgas und dergleichen. Vorteilhafterweise ist gemäss Anspruch 7 der Spülbereich durch eine vordere und eine hintere Ringdichtung begrenzt, welche zusammen mit zugeordneten äusseren Mantelteilen des Tauchrohres mediumdichte Abschlüsse bilden. Eine platzsparende Bauweise ergibt sich gemäss Anspruch 8, wonach das Tauchrohr am vorderen Ende abgeschlossen ist und mindestens eine seitliche Öffnung aufweist, welche in einer Spülstellung des Tauchrohres zwischen der vorderen und hinteren Ringdichtung liegt. Damit ist zudem der Sensor auch in ausgefahrener Stellung des Tauchrohres vor mechanischen Einwirkungen geschützt, da er nicht aus dem Tauchrohrende vorsteht. Vorzugsweise entspricht gemäss Anspruch 9 die Spülstellung des Tauchrohres der eingefahrenen Ruhestellung.

In der Ausgestaltung nach Anspruch 10 weist das Tauchrohr einen als Kolben ausgebildeten Abschnitt auf, der in einem zylinderförmigen Abschnitt des Gehäuses zwischen der eingefahrenen Ruhestellung und der ausgefahrenen Arbeitsstellung verschiebbar gelagert ist. Durch geeignete Gleitlager ist dabei eine geführte, reibungsarme Längsverschiebbarkeit gewährleistet, dank welcher insbesondere eine mechanische Belastung der zwischen Gehäuse und Tauchrohr angeordneten Ringdichtungen vermieden wird.

Grundsätzlich kann die Wechselarmatur für den Handbetrieb vorgesehen sein. Gemäss Anspruch 11 weist sie jedoch eine mittels Fluid, beispielsweise Druckluft oder Hydrauliköl, betriebene Antriebsvorrichtung zum axialen Verschieben des Tauchrohres auf.

### Kurze Beschreibung der Zeichnungen

Ausführungsbeispiele der Erfindung werden nachfolgend anhand der Zeichnungen näher beschrieben, dabei zeigen:
- Figur 1: eine Wechselarmatur mit Tauchrohr in eingefahrener Ruhestellung, im Längsschnitt;
- Figur 2: die Wechselarmatur der Figur 1, mit Tauchrohr in ausgefahrener Arbeitsstellung, im Längsschnitt;
- Figur 3: den vorderen Teil der Wechselarmatur der Figur 1, in vergrösserter Ansicht;
- Figur 4: den hinteren Teil der Wechselarmatur der Figur 1, in vergrösserter Ansicht;
- Figur 5: den hinteren Endbereich einer Wechselarmatur bei fehlendem Verschlussglied, im Längsschnitt;
- Figur 6: den hinteren Endbereich der Figur 5, bei fehlendem Einsatz, im Längsschnitt;
- Figur 7: den hinteren Endbereich der Figur 5, bei vorhandenem Verschlussglied und fehlendem Sensor, im Längsschnitt;
- Figur 8: den hinteren Endbereich der Figur 5, in betriebsbereitem Zustand, im Längsschnitt.

### Wege zur Ausführung der Erfindung

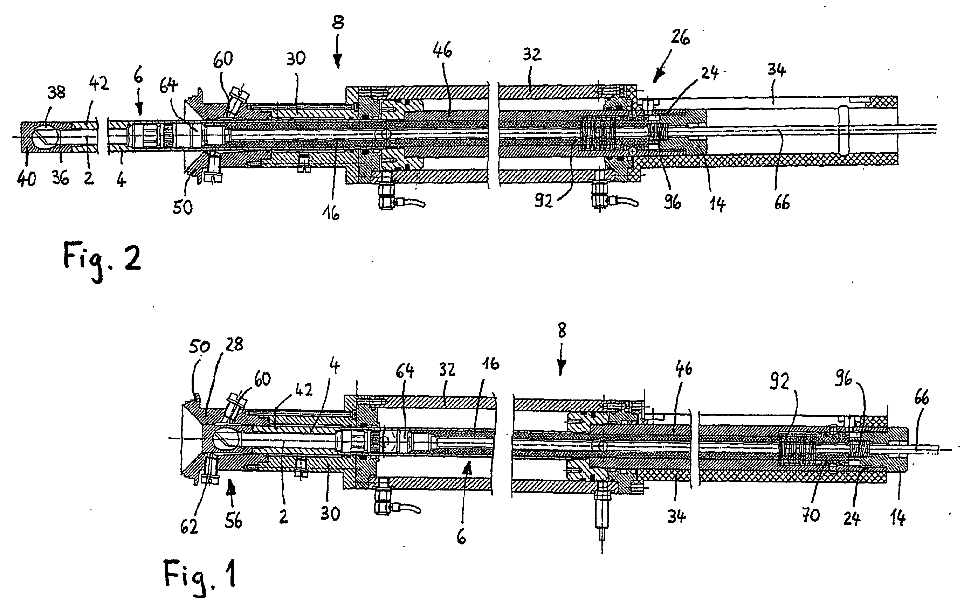

Die in den Figuren 1 bis 4 dargestellte Wechselarmatur enthält einen Sensor 2, der herausnehmbar im Vorderteil 4 eines Tauchrohres 6 angeordnet ist. Das Tauchrohr 6 und damit der Sensor 2 sind bezüglich eines Gehäuses 8 zwischen einer eingefahrenen Ruhestellung und einer ausgefahrenen Arbeitsstellung axial verschiebbar. In der in Figur 1 dargestellten Ruhestellung befinden sich das Tauchrohr 6 und der Sensor 2 innerhalb des Gehäuses 8; in der in Figur 2 dargestellten Arbeitsstellung ist das Tauchrohr 6 mit dem Sensor 2 ausgefahren und taucht in ein nicht näher dargestelltes Reaktionsgefäss ein, um Messwerte in einem darin befindlichen Medium zu ermitteln.

Ein vorderer Mantelabschnitt 10 des Sensors 2 und ein im Vorderteil 4 des Tauchrohres 6 eingelassener O-Ring 12 bilden einen mediumdichten Abschluss des Tauchrohres 6. Des Weiteren enthält das Tauchrohr 6 einen herausnehmbaren, mittels eines Verschlussgliedes 14 fixierbaren, rohrartigen Einsatz 16, mittels welchem der Sensor 2 in eingesetzter Lage gegen einen vorderen Anschlag 18 des Tauchrohres 6 vorgeschoben ist. Im gezeigten Beispiel ist dieser vordere Anschlag 18 durch eine stufenartige Verengung im Inneren des Tauchrohres 6 gebildet, gegen welchen der Sensor 2 mit einem Vorsprung 20 des Sensorschaftes 22 ansteht.

Wie aus den Figuren 1, 2 und 4 ersichtlich und nachfolgend noch näher erläutert, ist das Verschlussglied 14 am hinteren Ende 24 des Tauchrohres 6 einsetzbar und hält in eingesetzter Stellung den Einsatz 16 am Sensor 2 und letzteren am vorderen Anschlag 18.

Die Wechselarmatur ist zudem mit einer Sicherungsvorrichtung 26 ausgestattet, die ein axiales Verschieben des Tauchrohres 6 aus der Ruhestellung verhindert, wenn mindestens eines der Bauteile: Sensor 2, Einsatz 16 und Verschlussglied 14 fehlt.

Das Gehäuse 8 ist aus mehreren rohrartigen Bauteilen, nämlich einem vorderen Kammerteil 28, einem mittleren Kammerteil 30, einem zylinderförmigen Gehäuseteil 32 sowie einem hinteren Gehäuseteil 34, zusammengesetzt. Die einzelnen Kammerteile sind durch Verbindungsflansche und Befestigungsschrauben miteinander verbunden.

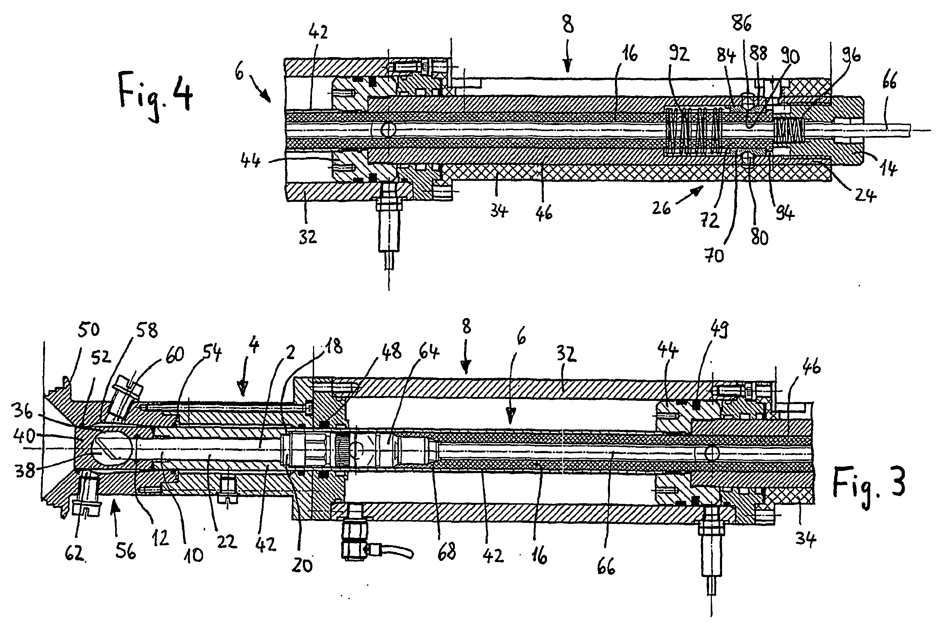

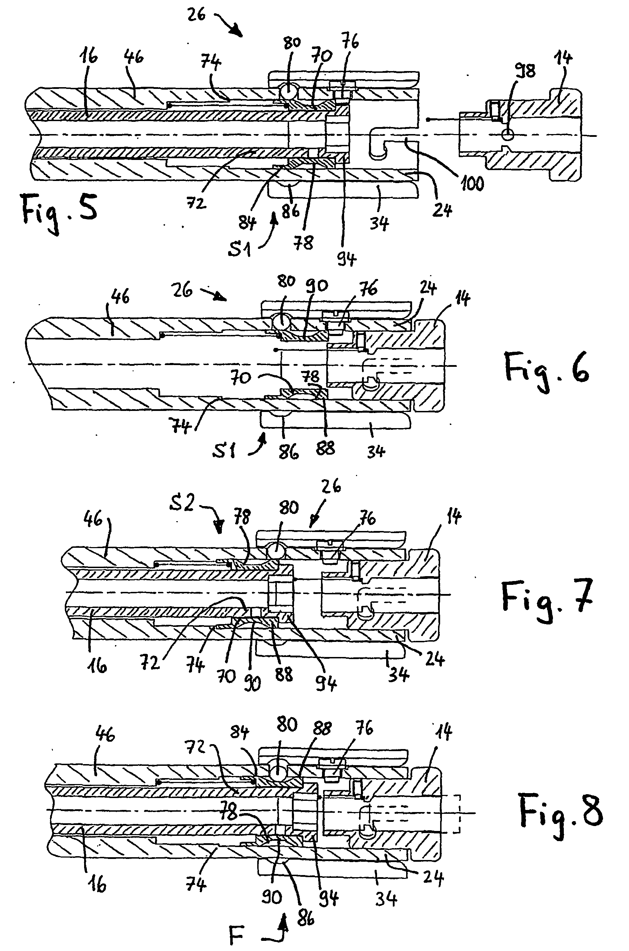

Das Tauchrohr 6 weist am vorderen Ende einen Käfig 36 auf, der mit mindestens einer seitlichen Durchtrittsöffnung 38 versehen ist, um in ausgefahrener Messstellung den Zutritt von Messmedium zum Sensor 2 zu gewährleisten. Ausserdem weist der Käfig 36 einen Boden 40 auf, der einen vorderen Abschluss des Tauchrohres bildet. Der Käfig 36 ist mit einem mittleren Tauchrohrteil 42 verschweisst, in dessen Innenwandung der besagte vordere Anschlag 18 für den Sensor 2 ausgebildet ist. An der dem Käfig 36 gegenüberliegenden Seite ist das mittlere Tauchrohrteil 42 mit einem Kolben 44 verbunden, der im zylindrischen Gehäuseteil 32 längsverschieblich gelagert ist. An der dem mittleren Tauchrohrteil 42 gegenüberliegenden Seite des Kolbens 44 ist ein hinteres Tauchrohrteil 46 angeordnet, welcher am hinteren Ende 24 mit einer Aufnahme für das Verschlussglied 14 ausgestattet ist. Wie insbesondere der Figur 3 entnehmbar, ist zwischen zusammenwirkenden Teilen des Gehäuses 8 und des Tauchrohres 6 eine Mehrzahl von Gleitlagern 48 vorgesehen.

Das vordere Kammerteil 28 ist mit einem Anschlussflansch 50 ausgestattet, mittels welchem die Wechselarmatur an ein Reaktionsgefäss anschliessbar ist. Da das vordere Kammerteil 28 als Bauteil des modular aufgebauten Gehäuses 8 ausgestaltet ist, lässt sich die Wechselarmatur an Reaktionsgefässe unterschiedlicher Anschlussmasse anschliessen, indem ein vorderes Kammerteil 28 mit entsprechend bemessenem Anschlussflansch 50 verwendet wird.

Wie ebenfalls aus der Figur 3 hervorgeht, ist das vordere Kammerteil 28 als Teil einer Spülvorrichtung für den Sensor 2 ausgestaltet. Zu diesem Zweck weist das vordere Kammerteil 28 einen durch eine vordere Ringnut 52 und eine hintere Ringnut 54 begrenzten Spülbereich 56 auf, dessen Umfangswand 58 mindestens einen Zulauf 60 sowie einen Ablauf 62 für Spülmedium aufweist. In jeder Ringnut befindet sich ein entsprechender Dichtungsring, welcher mit der Aussenwandung des Tauchrohres 6 einen mediumdichten Abschluss des Spülbereichs 56 bildet. In eingefahrener Ruhestellung des Tauchrohres 6, welche auch einer Spülstellung für den Sensor 2 entspricht, befindet sich der Käfig 36 innerhalb des Spülbereichs 56. Somit kann durch den Zulauf 60 zugeführtes Spülmedium durch die seitliche Durchtrittsöffnung 38 des Käfigs 36 zum darin befindlichen Sensor 2 gelangen. Ein Austritt von Spülmedium in die Wechselarmatur wird dabei durch den zwischen dem Mantel 10 des Sensors 2 und der Innenwandung des Tauchrohres 6 angeordneten O-Ring 12 verhindert. In ausgefahrener Messstellung befindet sich im vorderen Kammerteil 28 ein öffnungsloser Teil des Tauchrohres 6, so dass sich der Spülbereich 56 auf den zwischen den beiden Ringnuten 52 und 54 befindlichen Zwischenraum zwischen der Aussenwandung des Tauchrohres 6 und der Umfangswand 58 beschränkt.

Zweckmässigerweise ist der Zulauf 60 und der Ablauf 62 mit einem Innengewindeabschnitt versehen, in welchen ein entsprechendes Anschlussteil oder aber, wie in den Figuren 1 bis 3 dargestellt, ein Verschlussstopfen einschraubbar ist. Letzteres ist beispielsweise für die Vornahme von Dichtigkeitsprüfungen nützlich.

Unter "Spülmedium" ist im vorliegenden Zusammenhang nicht nur eine eigentliche Spülflüssigkeit wie beispielsweise Wasser zu verstehen. Vielmehr umfasst dieser Begriff je nach Anwendungsfall auch diverse Reinigungsmedien, wie sie beispielsweise für die sogenannte CIP-Reinigung (engl. "Cleaning In Place") verwendet werden. Des Weiteren kann es sich um Wasserdampf, Spülgase, oder auch Kalibrierungsflüssigkeiten handeln. Insbesondere kann am Zulauf 60 und allenfalls auch am Ablauf 62 eine Vorrichtung zur Behandlung des Sensors angeschlossen sein, welche beispielsweise eine ganze Abfolge von Reinigungs-, Spülungs- und Kalibrierungsschritten erlaubt. Ausserdem kann bei Bedarf mehr als nur ein Zulauf bzw. Ablauf vorgesehen werden.

Der Sensor 2 hat einen rückwärtigen Steckkopf mit elektrischen Anschlüssen, auf den eine entsprechende Anschlussbuchse 64 mit Anschlusskabel 66 aufgesteckt ist. Die nach hinten stufenartig verjüngte Anschlussbuchse 64 ist von einer entsprechend abgestuften Mündung 68 des Einsatzes 16 hintersteckt, wobei das Anschlusskabel 66 im Einsatz 16 zum hinteren Ende 24 des Tauchrohres 6 und dort durch das Verschlussglied 14 nach aussen geführt ist. Wie bereits erwähnt, hält der Einsatz 16 den Sensor 2 gegen den vorderen Anschlag 18 des Tauchrohres 6. Somit sind Sensor 2 und Einsatz 16 nicht nur formmässig, sondern auch längenmässig aufeinander so abzustimmen, dass ihre kombinierte Länge annähernd der Tauchrohrlänge entspricht.

Die Sicherungsvorrichtung 26, welche ein axiales Verschieben des Tauchrohres 6 aus der Ruhestellung verhindert, wenn der Sensor 2 oder der Einsatz 16 oder das Verschlussglied 14 oder eine Mehrzahl dieser Bauteile fehlt, ist wie folgt aufgebaut.

Wie insbesondere aus den Figuren 5 bis 8 hervorgeht, enthält das hintere Tauchrohrteil 46 einen Sicherungsschieber 70, welcher den rohrartigen Einsatz 16 an dessen hinterem Endbereich 72 hülsenartig umgreift. Der Sicherungsschieber 70 ist zwischen einem frontseitigen Anschlag und einem rückseitigen Anschlag innerhalb des hinteren Tauchrohrteiles 46 von einer ersten Sperrstellung S1 über eine Freigabestellung F zu einer zweiten Sperrstellung S2 verschiebbar. Im gezeigten Beispiel ist der frontseitige Anschlag durch eine absatzartige Verengung 74 im Inneren des hinteren Tauchrohrteiles 46 gebildet, während der rückseitige Anschlag durch einen in die Wandung des hinteren Tauchrohrteiles 46 eingeschraubten oder sonstwie befestigten Stift 76 gebildet ist. Die äussere Seitenwandung des Sicherungsschiebers 70 ist als Kulisse 78 für eine Mehrzahl von Sperrgliedern 80 ausgestaltet. Jedes Sperrglied 80 besteht aus einer Kugel, die in einer zugeordneten Durchgangsbohrung im hinteren Tauchrohrteil 46 radial verschieblich angeordnet ist.

In der ersten Sperrstellung S1 steht der Sicherungsschieber 70 am rückseitigen Anschlag 76 an, wobei jedes Sperrglied 80 mit seiner Innenseite am vorderen Sperrbereich 84 der Kulisse 78 ansteht und dadurch mit seiner Aussenseite in eine Sperrausnehmung 86 des Gehäuses 8 eingreift. Die Sperrausnehmung 86 ist als Ringnut an der Innenwand des hinteren Gehäuseteils 34 ausgebildet. Durch diesen Eingriff ist die axiale Verschiebbarkeit des Tauchrohres 6 gegenüber dem Gehäuse 8 gesperrt. In der zweiten Sperrstellung S2 steht der Sicherungsschieber 70 am frontseitigen Anschlag 74 an, wobei jedes Sperrglied 80 mit seiner Innenseite am hinteren Sperrbereich 88 der Kulisse 78 ansteht und dadurch wiederum mit seiner Aussenseite in die Sperrausnehmung 86 eingreift. Wie in der ersten Sperrstellung S1 ist die axiale Verschiebbarkeit des Tauchrohres 6 gegenüber dem Gehäuse 8 gesperrt. In der Freigabestellung F befindet sich der Sicherungsschieber 70 im Bereich zwischen den beiden Anschlägen 74 und 76, so dass jedes Sperrglied 80 mit der Innenseite in eine mittige Umfangsnut 90 der Kulisse 78 eingreift und dadurch mit seiner Aussenseite aus der Sperrausnehmung 86 frei kommt, wodurch die axiale Verschiebbarkeit des Tauchrohres 6 gegenüber dem Gehäuse 8 freigegeben wird.

Wie insbesondere anhand der Figur 4 erkennbar, ist der Sicherungsschieber 70 mittels einer ersten Feder 92 gegen das hintere Ende 24 des Tauchrohres 6 vorgespannt und steht bei vorhandenem Einsatz 16 an einem hinteren Flansch 94 des Einsatzes 16 an. Am Verschlussglied 14 ist überdies eine zweite Feder 96 angeordnet, mittels welcher der Einsatz 16 und damit auch der Sicherungsschieber 70 gegen das vordere Ende des Tauchrohres 6 vorgespannt ist. Dabei ergibt sich die nachfolgend erläuterte Wirkungsweise der Sicherungsvorrichtung.
a) Bei fehlendem Verschlussglied 14 fehlt die zweite Feder 96. Demnach wird der Sicherungsschieber 70 durch Einwirkung der ersten Feder 92 gegen den rückseitigen Anschlag 76, d.h. in der ersten Sperrstellung S1 gehalten, in welcher der vordere Sperrbereich 84 den Sperrgliedern 80 gegenüber steht (Figur 5). Dies ist unabhängig von der Anwesenheit des Sensors 2 und/oder des Einsatzes 16.
b) Bei fehlendem Einsatz 16 wird der Sicherungsschieber 70 - unabhängig davon, ob der Sensor 2 eingebaut ist oder nicht - durch Einwirkung der ersten Feder 92 gegen den rückseitigen Anschlag 76, d.h. in der ersten Sperrstellung S1 gehalten, in welcher der vordere Sperrbereich 84 den Sperrgliedern 80 gegenüber steht (Figur 6). Die zweite Feder 96 ist zwar vorhanden, bleibt aber wegen des fehlenden Einsatzes 16 wirkungslos.
c) Bei vorhandenem Verschlussglied 24 und fehlendem Sensor 2 wird durch Einwirkung der zweiten Feder 96 der Einsatz 16 und damit auch der vom hinteren Flansch 94 mitgenommene Sicherungsschieber 70 gegen den frontseitigen Anschlag 74, d.h. in der zweiten Sperrstellung S2 gehalten, in welcher der hintere Sperrbereich 88 den Sperrgliedern 80 gegenüber steht (Figur 7). Wesentlich ist dabei, dass die Kraft der zweiten Feder 96 die entgegenwirkende Kraft der ersten Feder 92 übertrifft. Wegen des fehlenden Sensors 2 bleibt der vordere Anschlag 18 im Tauchrohr 6 wirkungslos.
d) Im betriebsbereiten Zustand, d.h. bei vorhandenem Sensor 2, Einsatz 16 und Verschlussglied 14 wirken an sich dieselben Kräfteverhältnisse wie oben unter Punkt c) beschrieben. Wiederum wird der Einsatz 16 und damit auch der vom hinteren Flansch 94 mitgenommene Sicherungsschieber 70 nach vome gedrängt. Allerdings wird die erste Sperrstellung S1 nicht erreicht, da der Sensor 2 am vorderen Anschlag 18 im Tauchrohr 6 ansteht und dadurch ein weiteres Vorschieben des Einsatzes 16 verhindert. Im Ergebnis wird der Sicherungsschieber 70 in der Freigabestellung F gehalten, in welcher die mittige Umfangsnut 90 den Sperrgliedern 80 gegenüber steht.

Aus dem Vorangehenden ist auch erkennbar, dass die Sicherungsvorrichtung 26 nicht nur auf fehlende, sondern auch auf falsch eingebaute oder falsch dimensionierte Bauteile anspricht. Dies ist nachfolgend noch näher erläutert.

Im Falle eines zu kurzen Sensors ist der vordere Anschlag 18 wirkungslos, d.h. der Sicherungsschieber 70 gelangt in die erste Sperrstellung S1. Bei zu langem Sensor hingegen kann der Einsatz 16 nicht genügend weit vorgeschoben werden, um die Freigabestellung F zu erreichen, so dass der Sicherungsschieber 70 in der zweiten Sperrstellung S2 verbleibt. Analoges gilt für einen zu kurzen oder zu langen Einsatz 16.

Wie aus den Figuren 5 bis 8 hervorgeht, ist das hintere Verschlussglied 14 mit einem seitlich vorstehenden Zapfen 98 versehen, der in einen zugeordneten L-förmigen Einfahrschlitz 100 am hinteren Ende 24 des Tauchrohres 6 eingreift. Durch Einführen und anschliessendes Verdrehen des Verschlussgliedes 14 wird dieses in eine gegenüber Längsverschiebung verriegelte Stellung gebracht. Bei unverriegelt eingesetztem Verschlussglied 14 wird dieses durch die erste Feder 92 aus dem Tauchrohr 6 gedrängt, woraufhin der Sicherungsschieber 70 in die erste Sperrstellung S1 geschoben wird.

In einer nicht näher dargestellten Ausgestaltung sind der rohrartige Einsatz 16, die zweite Feder 96 und das Verschlussglied 14 je mit einer durchgehenden seitlichen Ausnehmung versehen. Bei der zweiten Feder 96 ist diese Ausnehmung durch eine an sich bekannte nicht-umlaufende Anordnung der Federwindungen bewerkstelligt, während sie beim Einsatz 16 und beim Verschlussglied 14 als durchgehender seitlicher Schlitz ausgestaltet ist. Da sich das Anschlusskabel 66 in die geschlitzten Bauteile ohne Einfädeln von der Seite her einlegen lässt, können beispielsweise auch Sensoren mit sperrigen Steckeranschlüssen, angebauten Vorverstärkem und dergleichen in die Wechselarmatur eingesetzt werden.

Zweckmässigerweise ist die Wechselarmatur mit einer Verdrehsperre ausgestattet, die eine Drehung des Tauchrohres um seine Längsachse verhindert. Zu diesem Zweck ist beispielsweise das hintere Tauchrohrteil 46 mit einem Vorsprung versehen, der in einen zugeordneten Längsschlitz des hinteren Gehäuseteils 34 eingreift. Damit lässt sich einerseits eine definierte Ausrichtung der Durchtrittsöffnungen 38 im Käfig 36 gegenüber den Zu- und Abläufen des Spülbereichs 56 erreichen. Andererseits wird mit der Verdrehsperre sichergestellt, dass bei Verwendung eines nichtrotationssymmetrischen Sensors dessen sensitive Fläche eine gewünschte Ausrichtung, beispielsweise bezüglich einer Strömungsrichtung im Reaktionsgefäss, hat.

Die Längsverschiebung des Kolbens 44 im zylindrischen Gehäuseteil 32 kann manuell oder mittels einer geeigneten Hydraulik-Vorrichtung erfolgen, welche beispielsweise mit Druckluft, Hydraulik-Öl, Wasser oder einem anderen geeigneten Fluidum betrieben wird. Zweckmässigerweise sind zudem Positionsrückmelder vorhanden, mittels welcher die Längsposition des Tauchrohres feststellbar ist.

Wie aus der Figur 2 ersichtlich ist, befindet sich das hintere Ende 24 des Tauchrohres 6 sowie das darin eingesetzte Verschlussglied 14 in der ausgefahrenen Arbeitsstellung im Inneren des hinteren Gehäuseteils 34, womit das Verschlussglied 14 nicht ohne weiteres zugänglich ist. Damit wird ein versehentliches Entfernen des Verschlussgliedes 14 in der ausgefahrenen Arbeitsstellung verhindert. Dies stellt insbesondere bei einem unter Druck stehenden Reaktionsgefäss eine zusätzliche Absicherung gegen ein unerwünschtes Austreten von Reaktionsmedium dar.

Obwohl die Wechselarmatur jeweils in horizontaler Einbaulage gezeigt wurde, ist sie grundsätzlich auch für eine vertikale Einbaulage mit nach unten weisendem Sensorteil sowie für dazwischen liegende Einbaulagen verwendbar.

### Bezugszeichenliste

- 2: Sensor
- 4: Vorderteil von 6
- 6: Tauchrohr
- 8: Gehäuse
- 10: vorderer Mantelabschnitt von 2
- 12: O-Ring
- 14: Verschlussglied
- 16: Einsatz
- 18: vorderer Anschlag von 6
- 20: Vorsprung von 22
- 22: Sensorschaft
- 24: hinteres Ende von 6
- 26: Sicherungsvorrichtung
- 28: vorderes Kammerteil von 8
- 30: mittleres Kammerteil
- 32: zylindrisches Gehäuseteil
- 34: hinteres Gehäuseteil
- 36: Käfig von 6
- 38: Durchtrittsöffnung von 36
- 40: Boden von 36
- 42: mittleres Tauchrohrteil
- 44: Kolben
- 46: hinteres Tauchrohrteil
- 48: Gleitlager
- 50: Anschlussflansch von 28
- 52: vordere Ringnut
- 54: hintere Ringnut
- 56: Spülbereich
- 58: Umfangswand von 56
- 60: Zulauf
- 62: Ablauf
- 64: Anschlussbuchse
- 66: Anschlusskabel
- 68: vordere Mündung von 16
- 70: Sicherungsschieber
- 72: hinterer Endbereich von 16
- 74: frontseitiger Anschlag
- 76: rückseitiger Anschlag
- 78: Aussenwand (Kulisse) von 70
- 80: Sperrglied
- 84: vorderer Sperrbereich von 78
- 86: Sperrausnehmung
- 88: hinterer Sperrbereich von 78
- 90: mittige Umfangsnut von 78
- 92: erste Feder
- 94: hinterer Flansch von 16
- 96: zweite Feder
- 98: Zapfen von 14
- 100: Einfahrschlitz für 98

## Patentansprüche

1. Wechselarmatur mit einem Sensor (2), der herausnehmbar im Vorderteil (4) eines Tauchrohres (6) angeordnet ist, welches in einem Gehäuse (8) zwischen einer eingefahrenen Ruhestellung und einer ausgefahrenen Arbeitsstellung axial verschiebbar ist, wobei der Sensor (2) in eingesetzter Lage einen mediumdichten Abschluss (10, 12) des Tauchrohres (6) bildet, wobei das Tauchrohr (6) einen herausnehmbaren, mittels eines Verschlussgliedes (14) fixierbaren Einsatz (16) enthält, mittels welchem der Sensor (2) in eingesetzter Lage gegen einen vorderen Anschlag (18) des Tauchrohres (6) vorgeschoben ist, wobei eine Sicherungsvorrichtung (26) vorhanden ist, die ein axiales Verschieben des Tauchrohres (6) aus der Ruhestellung verhindert, wenn mindestens eines der Bauteile: Sensor (2), Einsatz (16) und Verschlussglied (14) fehlt, **dadurch gekennzeichnet, dass** die Sicherungsvorrichtung (26) einen das hintere Ende (72) des Einsatzes (16) hülsenartig umgreifenden Sicherungsschieber (70) aufweist, der zwischen einem weiteren frontseitigen Anschlag (74) und einem rückseitigen Anschlag (76) innerhalb des Tauchrohres (6) von einer ersten Sperrstellung (S1) über eine Freigabestellung (F) zu einer zweiten Sperrstellung (S2) verschiebbar ist, wobei der Sicherungsschieber (70) mit mindestens einem Sperrglied (80) zusammenwirkt, das radial verschieblich im Tauchrohr (6) angeordnet ist und in Sperrstellung (S1, S2) des Sicherungsschiebers (70) mit seiner Innenseite am Mantel (78; 84, 88) des Sicherungsschiebers (70) ansteht und mit seiner Aussenseite in eine Sperrausnehmung (86) im Gehäuse (8) eingreift beziehungsweise in Freigabestellung (F) des Sicherungsschiebers (70) mit der Innenseite in eine Umfangsnut (90) im Sicherungsschieber (70) eingreift und mit seiner Aussenseite aus der Sperrausnehmung (86) des Gehäuses (8) frei kommt.

2. Wechselarmatur nach Anspruch 1, **dadurch gekennzeichnet, dass** der Einsatz (16) rohrartig ausgebildet ist und eine vordere Stirnseite (68) aufweist, die gegen eine zugeordnete rückwärtige Stirnseite (64) des Sensors (2) ansteht.

3. Wechselarmatur nach Anspruch 1 oder 2, **dadurch gekennzeichnet, dass** das Verschlussglied (14) am hinteren Ende (24) des Tauchrohres (6) einsetzbar ist und in eingesetzter Stellung den Einsatz (16) am Sensor (2) und letzteren am vorderen Anschlag (18) hält.

4. Wechselarmatur nach einem der Ansprüche 1 bis 3, **dadurch gekennzeichnet, dass** der Sicherungsschieber (70) einen vorderen Sperrbereich (84), einen hinteren Sperrbereich (88) sowie eine mittige Umfangsnut (90) aufweist und mittels einer ersten Feder (92) gegen das hintere Ende (24) des Tauchrohres (6) vorgespannt ist und bei vorhandenem Einsatz (16) an einem hinteren Flansch (94) des Einsatzes (16) ansteht, wobei am Verschlussglied (14) eine zweite Feder (96) angeordnet ist, mittels welcher der Einsatz (16) gegen das vordere Ende (4) des Tauchrohres (6) vorgespannt ist, das Ganze derart, dass:
a) bei fehlendem Verschlussglied (14) der Sicherungsschieber (70) mit dem vorderen Sperrbereich (84) dem Sperrglied (80) gegenüber steht (S1);
b) bei fehlendem Einsatz (16) der Sicherungsschieber (70) mit dem vorderen Sperrbereich (84) dem Sperrglied (80) gegenüber steht (S1);
c) bei vorhandenem Verschlussglied (14) und fehlendem Sensor (2) der Sicherungsschieber (70) mit dem hinteren Sperrbereich (88) dem Sperrglied (80) gegenüber steht (S2); und:
d) in betriebsbereitem Zustand der Sicherungsschieber (70) mit der mittigen Umfangsnut (90) dem Sperrglied (80) gegenüber steht (F).

5. Wechselarmatur nach Anspruch 4, **dadurch gekennzeichnet, dass** der Einsatz (16), die zweite Feder (96) und das Verschlussglied (14) je mit einer durchgehenden seitlichen Ausnehmung versehen sind.

6. Wechselarmatur nach einem der Ansprüche 1 bis 5, **dadurch gekennzeichnet, dass** ein vorderer Teil des Gehäuses (8) einen Spülbereich (56) mit mindestens einem Zulauf (60) und einem Ablauf (62) für Spülmedium beinhaltet.

7. Wechselarmatur nach Anspruch 6, **dadurch gekennzeichnet, dass** der Spülbereich (56) durch eine vordere und eine hintere Ringdichtung begrenzt ist, welche zusammen mit zugeordneten äusseren Mantelteilen des Tauchrohres (6) mediumdichte Abschlüsse bilden.

8. Wechselarmatur nach Anspruch 7, **dadurch gekennzeichnet, dass** das Tauchrohr (6) am vorderen Ende (4; 40) abgeschlossen ist und mindestens eine seitliche Öffnung (38) aufweist, welche in einer Spülstellung des Tauchrohres zwischen der vorderen und hinteren Ringdichtung liegt.

9. Wechselarmatur nach Anspruch 8, **dadurch gekennzeichnet, dass** die Spülstellung des Tauchrohres der eingefahrenen Ruhestellung entspricht.

10. Wechselarmatur nach einem der Ansprüche 1 bis 9, **dadurch gekennzeichnet, dass** das Tauchrohr (6) einen als Kolben (44) ausgebildeten Abschnitt aufweist, der in einem zylinderförmigen Abschnitt (32) des Gehäuses (8) zwischen der eingefahrenen Ruhestellung und der ausgefahrenen Arbeitsstellung verschiebbar gelagert ist.

11. Wechselarmatur nach Anspruch 10, **dadurch gekennzeichnet, dass** sie eine mittels Fluid betriebene Antriebsvorrichtung zum axialen Verschieben des Tauchrohres (6) aufweist.

## Claims

1. Retractable housing with a sensor probe (2) that is removably arranged in the forward portion (4) of an immersion tube (6) which is axially movable in a housing (8) between a retracted rest position and a deployed working position, wherein the sensor probe (2) in its installed condition provides a medium-tight closure (10, 12) of the immersion tube (6), wherein the immersion tube (6) has a removable insert (16) which can be held in a fixed position by means of a closure member (14) and by means of which the sensor probe (2) in its installed position is pushed forward against a forward stop (18) of the immersion tube (6), wherein a safety device (26) is provided which prevents an axial movement of the immersion tube (6) out of its rest position if at least one of the components sensor probe (2), insert (16) and closure member (14) are missing, **characterized in that** the safety device (26) has a safety slide (70) which surrounds the rear end (72) of the insert (16) like a sleeve and which is movable between a further forward stop (74) and a rearward stop (76) inside the immersion tube (6) from a first locking position (S1) through a releasing position (F) to a second locking position (S2), wherein the safety slide (70) cooperates with at least one locking member (80) that is arranged with radial mobility in the immersion tube (6), wherein in the locking position (S1, S2) of the safety slide (70), the locking member (80) sits with its inward-facing side against the outside surface (78; 84, 88) of the safety slide (70) while the outward-facing side of the locking member (90) engages a locking recess (86) in the housing (8), and wherein in the releasing position (F) of the safety slide (70), the locking member (80) engages at its inward-facing side a circumferential groove (90) in the safety slide (70), while the outward-facing side of the locking member (80) is freed from the locking recess (86) of the housing (8).

2. Retractable housing according to claim 1, **characterized in that** the insert (16) is configured in a tubular shape and has a front side (68) that sits against a matching rearward-facing side (64) of the sensor probe (2).

3. Retractable housing according to claim 1 or 2, **characterized in that** the closure member (14) can be inserted at the rear end (24) of the immersion tube (6) and, in its installed condition, keeps the insert (16) seated against the sensor probe (2) and also keeps the latter seated against the forward stop (18).

4. Retractable housing according to one of the claims 1 to 3, **characterized in that** the safety slide (70) has a forward locking portion (84), a rearward locking portion (88) as well as a circumferential groove (90) around its middle, and that the safety slide (70) is pre-tensioned against the rear end (24) of the immersion tube (6) by means of a first spring (92) and that when the insert (16) is in place, the safety slide (70) sits against a rearward flange (94) of the insert, wherein by means of a second spring (96) that is arranged on the closure member (14), the insert (16) is pre-tensioned against the front end (4) of the immersion tube (6), with the entire arrangement working in such a way that:
a) when the closure member (14) is missing, the safety slide (70) is in position (S1) with the forward locking portion (84) located opposite the locking member (80);
b) when the insert (16) is missing, the safety slide (70) is in position (S1) with the forward locking portion (84) located opposite the locking member (80);
c) when the closure member (14) is in place and the sensor probe (2) is missing, the safety slide (70) is in position (S2) with the rearward locking portion (88) located opposite the locking member (80); and:
d) in the operative state, the safety slide (70) is in position (F) with the circumferential groove (90) in the middle of the safety slide located opposite the locking member (80).

5. Retractable housing according to claim 4, **characterized in that** the insert (16), the second spring (96) and the closure member (14) are each equipped with a lateral opening extending over their entire respective lengths.

6. Retractable housing according to one of the claims 1 to 5, **characterized in that** an anterior part of the housing (8) includes a rinsing area (56) with at least one inlet (60) and a drainage outlet (62) for a rinsing medium.

7. Retractable housing according to claim 6, **characterized in that** the rinsing area (56) is delimited in front and back by ring seals which form medium-tight closure barriers together with the associated parts of the cylindrical outside surface of the immersion tube (6).

8. Retractable housing according to claim 7, **characterized in that** the immersion tube (6) is closed off at the front end (4; 40) and has at least one lateral opening (38) which, in a rinsing position of the immersion tube, lies between the forward and rearward ring seals.

9. Retractable housing according to claim 8, **characterized in that** the rinsing position of the immersion tube is identical with the retracted rest position.

10. Retractable housing according to one of the claims 1 to 9, **characterized in that** the immersion tube (6) has a section configured as a piston (44) which is held in a cylindrical section (32) of the housing (8) with axial mobility between the retracted rest position and the deployed working position.

11. Retractable housing according to claim 10, **characterized in that** the Retractable housing comprises a fluid-operated actuator device to drive the axial movement of the immersion tube (6).

## Revendications

1. Support rétractable avec un capteur (2), qui est disposée de façon amovible dans la partie avant (4) d'un tube à immersion (6), lequel peut être déplacé axialement dans un boîtier (8) entre une position de repos rentrée et une position de travail sortie, le capteur (2) formant dans la position insérée une terminaison (10, 12) étanche au fluide du tube à immersion (6), le tube à immersion (6) contenant une insertion (16) amovible et pouvant être fixée au moyen d'un élément de fermeture (14), au moyen de laquelle le capteur (2) est avancé dans la position insérée vers une butée avant (18) du tube à immersion (6), un dispositif de sécurité (26) étant présent, lequel empêche un déplacement axial du tube à immersion (6) à partir de la position de repos lorsqu'au moins l'un des composants suivants : capteur (2), insertion (16) et élément de fermeture (14) manque, **caractérisée en ce que** le dispositif de sécurité (26) présente un coulisseau de sécurité (70) entourant l'extrémité arrière (72) de l'insertion (16) à la façon d'une douille, qui peut être déplacé entre une autre butée côté avant(74) et une butée côté arrière (76) à l'intérieur du tube à immersion (6) depuis une première position de blocage (S1) jusqu'à une seconde position de blocage (S2) en passant par une position de libération (F), le coulisseau de sécurité (70) coopérant avec au moins un organe de blocage (80), lequel est disposé dans le tube à immersion (6) de façon coulissante dans le sens radial et dans la position de blocage (S1, S2) du coulisseau de sécurité (70) s'applique avec son côté intérieur sur l'enveloppe (78 ; 84 ; 88) du coulisseau de sécurité (70) et s'engage avec son côté extérieur dans un évidement de blocage (86) dans le boîtier (8) ou s'engage dans la position de libération (F) du coulisseau de sécurité (70) avec le côté intérieur dans une rainure périphérique (90) dans le coulisseau de sécurité (70) et sort librement avec son côté extérieur de l'évidement de blocage (86) du boîtier (8).

2. Support rétractable selon la revendication 1, **caractérisée en ce que** l'insertion (16) est conçue comme un tube et présente un côté frontal avant (68) qui s'applique contre un côté frontal arrière (64) attribué du capteur (2).

3. Support rétractable selon la revendication 1 ou 2, **caractérisée en ce que** l'élément de fermeture (14) peut être inséré sur l'extrémité arrière (24) du tube à immersion (6) et maintient dans la position insérée l'insertion (16) sur le capteur (2) et celui-ci sur la butée avant(18).

4. Support rétractable selon l'une quelconque des revendications 1 à 3, **caractérisée en ce que** le coulisseau de sécurité (70) présente une zone de blocage avant (84), une zone de blocage arrière (88) et une rainure périphérique centrale (90) et est pré-tendu au moyen d'un premier ressort (92) contre l'extrémité arrière (24) du tube à immersion (6) et s'applique lorsque l'insertion (16) est présente sur une bride arrière (94) de l'insertion (16), un second ressort (96) étant disposé sur l'élément de fermeture (14), au moyen duquel l'insertion (16) peut être pré-tendue contre l'extrémité avant (4) du tube à immersion (6), l'ensemble de telle sorte que
a) en cas d'absence de l'élément de fermeture (14), le coulisseau de sécurité (70) avec la zone de blocage avant (84) fait face (S1) à l'élément de blocage (80) ;
b) avec l'insertion (16) absente, le coulisseau de sécurité (70) avec la zone de blocage avant (84) fait face (S1) à l'élément de blocage (80) ;
c) avec l'élément de fermeture (14) présent et le capteur (2) absent, le coulisseau de sécurité (70) avec la zone de blocage arrière (88) fait face (S2) à l'élément de blocage (80) ; et
d) dans l'état opérationnel, le coulisseau de sécurité (70) avec la rainure périphérique centrale (90) fait face (F) à l'élément de blocage (80).

5. Support rétractable selon la revendication 4, **caractérisée en ce que** l'insertion (16), le second ressort (96) et l'élément de fermeture (14) sont dotés chacun d'un évidement latéral et continu.

6. Support rétractable selon l'une quelconque des revendications 1 à 5, **caractérisée en ce qu'**une partie avant du boîtier (8) contient une zone de lavage (56) avec au moins une entrée (60) et une sortie (62) pour le fluide de lavage.

7. Support rétractable selon la revendication 6, **caractérisée en ce que** la zone de lavage (56) est délimitée par un joint annulaire avant et un joint annulaire arrière, lesquels forment avec des parties d'enveloppe extérieures attribuées du tube à immersion (6) des fermetures étanches au fluide.

8. Support rétractable selon la revendication 7, **caractérisée en ce que** le tube à immersion (6) est terminé sur l'extrémité avant (4 ; 40) et présente au moins une ouverture (38) latérale, qui est disposée dans une position de lavage du tube à immersion entre le joint annulaire avant et le joint annulaire arrière.

9. Support rétractable selon la revendication 8, **caractérisée en ce que** la position de lavage du tube à immersion correspond à la position de repos rentrée.

10. Support rétractable selon l'une quelconque des revendications 1 à 9, **caractérisée en ce que** le tube à immersion (6) présente une partie conçue comme un piston (44) qui est logée dans une partie (32) de forme cylindrique du boîtier (8) de façon coulissante entre la position de repos rentrée et la position de travail sortie.

11. Support rétractable selon la revendication 10, **caractérisée en ce qu'**il présente un dispositif d'entraînement exploité avec du fluide pour le déplacement axial du tube à immersion (6).
